# EUROPÄISCHE PATENTSCHRIFT

(11) **EP 2 646 983 B1**
(45) Veröffentlichungstag und Bekanntmachung des Hinweises auf die Patenterteilung: **06.03.2019**
(21) Anmeldenummer: 11760406.6
(22) Anmeldetag: 16.09.2011
(51) Int. Cl.: G06T 7/68

(54) **SYMMETRIEBASIERTE VISUALISIERUNG RADIOLOGISCHER DATEN**
SYMMETRY-BASED VISUALIZATION OF RADIOLOGICAL DATA
VISUALISATION DE DONNÉES RADIOLOGIQUES À BASE DE SYMÉTRIE

(30) Priorität: 01.12.2010 DE 102010053121
(43) Veröffentlichungstag der Anmeldung: 09.10.2013
(73) Patentinhaber: Sicat GmbH & CO. KG, 53177 Bonn (DE)
(72) Erfinder: HEY, Joachim, 53639 Königswinter (DE); HANSSEN, Nils, 53111 Bonn (DE)
(74) Vertreter: Braun-Dullaeus, Karl-Ulrich
(86) Internationale Anmeldenummer: PCT/EP2011/004650
(87) Internationale Veröffentlichungsnummer: WO 2012/072157

(56) Entgegenhaltungen:
- TRON A DARVANN ET AL: "Automated quantification and analysis of mandibular asymmetry", BIOMEDICAL IMAGING: FROM NANO TO MACRO, 2010 IEEE INTERNATIONAL SYMPOSIUM ON, IEEE, PISCATAWAY, NJ, USA, 14. April 2010 (2010-04-14), Seiten 416-419, XP031693592, ISBN: 978-1-4244-4125-9
- GLERUP, N., NIELSEN, M., SPORRING, J., KREIBORG, S.: "Asymmetry Quantization and Application to Human Mandibles", SPIE, PO BOX 10 BELLINGHAM WA 98227-0010 USA, Bd. 5370, Februar 2004 (2004-02), Seiten 274-282, XP040182032,
- ADNAN BIBIC ET AL: "Denoising of arterial spin labeling data: wavelet-domain filtering compared with Gaussian smoothing", MAGNETIC RESONANCE MATERIALS IN PHYSICS, BIOLOGY AND MEDICINE, CHAPMAN AND HALL, LONDON, GB, Bd. 23, Nr. 3, 28. April 2010 (2010-04-28) , Seiten 125-137, XP019810035, ISSN: 1352-8661
- GANG XU ET AL: "Automatic extraction of brain Mid-sagittal Line from normal and abnormal CT images", COMPUTER SCIENCE AND INFORMATION TECHNOLOGY (ICCSIT), 2010 3RD IEEE INTERNATIONAL CONFERENCE ON, IEEE, PISCATAWAY, NJ, USA, 9. Juli 2010 (2010-07-09), Seiten 178-183, XP031748249, ISBN: 978-1-4244-5537-9
- LIU Y ET AL: "Automatic bilateral symmetry (midsagittal) plane extraction from pathological 3D neuroradiological images", VISUAL COMMUNICATIONS AND IMAGE PROCESSING; 20-1-2004 - 20-1-2004; SAN JOSE,, vol. 3338, 23 February 1998 (1998-02-23), pages 1528-1539, XP009145893, DOI: 10.1117/12.310886 ISBN: 978-1-62841-730-2
- THIRION J-P ET AL: "Statistical analysis of normal and abnormal dissymmetry in volumetric medical images", BIOMEDICAL IMAGE ANALYSIS, 1998. PROCEEDINGS. WORKSHOP ON SANTA BARBARA, CA, USA 26-27 JUNE 1998, LOS ALAMITOS, CA, USA,IEEE COMPUT. SOC, US, 26 June 1998 (1998-06-26), pages 74-83, XP010291401, DOI: 10.1109/BIA.1998.692397 ISBN: 978-0-8186-8460-9

## Beschreibung

Die Erfindung betrifft ein Verfahren zur Visualisierung kieferorthopädischer Fehlstellungen durch automatische Aufbereitung und Darstellung in digitaler Form vorliegender radiologischer Bilddaten, die Gewebestrukturen im Körper eines Patienten enthalten.

Generell sind eine Vielzahl solcher Verfahren bekannt, mit denen sich Bilddaten, die mittels eines radiologischen Verfahrens, wie Röntgen, CT oder NMR, aufgenommen wurden, im Hinblick auf eine bestimmte Fragestellung aufbereiten und darstellen lassen. Insbesondere werden in diesem Zusammenhang unterschiedliche Filterfunktionen eingesetzt, mit denen es möglich ist, besonders interessierende Details durch Veränderung der Kontraste hervorzuheben, um dem Betrachter bestimmte Informationen besonders markant darbieten zu können.

Es ist jedoch bislang keine Funktionalität bekannt, die hinter Gewebestrukturen verborgene Anomalien in einer Darstellung hervorhebt und dadurch den Blick des behandelnden Arztes unmittelbar auf diese lenkt. Um solche Anomalien feststellen zu können, muss der behandelnde Arzt bislang die gesamten Volumendaten sichten, wobei eine solche Sichtung typischerweise in Schichtansichten volumetrischer Datensätze stattfindet, da die dreidimensionalen Bilddaten nur mit solchen Schichtansichten überlagerungsfrei dargestellt werden können.

In der Veröffentlichung "Automated Quantification and Analysis of mandibular Asymmetry" von Tron A. Darvann et. al. wird zwar beschrieben, wie Asymmetrien des Kieferknochens erkannt werden können. Hierzu wird ein Oberflächenabbild der einen Seite des Kiefers gespiegelt; die Spiegelung wird dann mit einem Oberflächenabbild der anderen Seite des Kiefers verglichen. Aus den Abweichungen zwischen dem Spiegelbild der einen Seite und dem Originalabbild der anderen Seite werden Asymmetrien erkennbar. Anhand eines solchen Verfahrens lassen sich aber keine hinter Gewebestrukturen verborgene Anomalien entdecken.

In dem Artikel "Automatic Bilateral Symmetry (Midsagittal) Plane Extraction from Pathological 3D Nueroradiological Images", Liu et al, 1998 (XP009145893) ist ein Verfahren beschrieben, anhand neuraler Scans eine Symmetrieebene im Gehirn zu finden. Der Artikel "Statistical Analysis of Normal and Abnormal Dissymmetriy in Volumetric Medical Images", Thirion et al, 1998 (XP010291401) beschreibt die Entdeckung und Darstellung von Asymmetrien im Gehirn.

Die Aufgabe der vorliegenden Erfindung ist es nunmehr, ein einfach umzusetzendes Verfahren für die Visualisierung von kieferorthopädischen Fehlstellungen ("Dysgnathien") zu schaffen.

Diese Aufgabe wird durch das Verfahren nach Anspruch 1 gelöst. Vorteilhafte Ausführungsformen sind in den Unteransprüchen genannt.

Der wesentliche Grundgedanke der Erfindung liegt darin, Fehlstellungen, insbesondere Dysgnathien, anhand von automatisch ermittelten Asymmetrien in normalerweise symmetrisch angeordneten Gewebestrukturen zu erkennen. In dem erfindungsgemäßen Verfahren wird das dadurch umgesetzt, dass von den über einen Datenraum verteilten Bilddaten ausgegangen wird, wobei der Datenraum im Falle tomographisch aufgenommener und daher in drei Dimensionen vorliegender Bilddaten ein Schnitt definierter Stärke durch das Datenvolumen ist. Die in einem solchen Datenraum verteilten Bilddaten sind in einer Originaldarstellung darstellbar. Erfindungsgemäß werden diese Bilddaten an einer im Datenraum verlaufenden Symmetrieachse gespiegelt, nachdem sie, wie zu beschreiben sein wird, vorteilhafterweise aufbereitet wurden. Nach der Spiegelung werden die jeweils aufeinander gespiegelten Voxel verglichen, wobei durch den Vergleich Deckungsabweichungen, die sich insbesondere in Wertunterschieden der aufeinander gespiegelten Voxel manifestieren, registriert werden. Registrierbare Unterschiede sind auf Asymmetrien in den Gewebestrukturen zurück zu führen, die dann mit Hilfe einer als "Symmetriekarte" bezeichneten Darstellung in markanter Weise, beispielsweise in einer besonders auffälligen Farbe, dargebracht ("visualisiert") werden.

Mit dem erfindungsgemäßen Verfahren lassen sich auf der Grundlage insbesondere mit bildgebenden Verfahren wie CT oder NMR aufgenommener dreidimensionaler Bilddatensätze orthopädische und insbesondere kieferorthopädische Anomalien, sogenannte "Dysgnathien", automatisch erkennen und in prägnanter Weise für den Betrachter sichtbar machen. Dabei werden vorteilhafterweise solche Fehlstellungen untersucht, die asymmetrisch nicht zu irgendeiner Ebene, sondern zur anatomisch bedingten medianen Sagittalebene des Körpers respektive des Kopfes sind. Diese mediane Sagittalebene ist durch den diesbezüglich in großen Teilen symmetrisch aufgebauten Körper definiert und lässt sich auch automatisch finden. Gerade kieferorthopädische Dysgnathien aber auch andere Fehlstellungen sind in vielen Fällen durch Abweichung von der Spiegelsymmetrie der Kopf-, Kiefer- und Zahnanatomie feststellbar.

Dabei werden eine Vielzahl von Spiegelungen von Bilddaten unterschiedlicher Datenräume an einer entsprechenden Vielzahl von Symmetrieachsen, die insbesondere in der medialen Sagittalebene liegen, durchgeführt werden. So können insbesondere Stapel aufeinanderliegender Schichten, die jeweils einen Datenraum bilden, einzeln gespiegelt werden, so dass vorhandene Asymmetrien in ihrer Dreidimensionalität dargestellt werden können. Entsprechend wird auch eine dreidimensionale Symmetriekarte erzeugt. Rechnerisch lassen sich die Symmetrien respektive die Asymmetrien in den Bilddaten mit bestimmten Operatoren ermitteln. Beispielsweise kann eine einfache Differenzbildung der gespiegelten Voxelpaare aus der insbesondere vorgefilterten Originaldarstellung zur Asymmetrieerkennung verwendet werden. Durch eine nach der Differenzbildung durchgeführte Betragbildung stellen höhere Werte in der so entstandenen Symmetriekarte stärkere Symmetrieabweichungen, also Asymmetrien, dar. Niedrigere Werte in der so entstandenen Symmetriekarte sind hingegen in Bereichen anzutreffen, in denen die Originaldarstellung weitestgehend symmetrisch ist. Vorteilhafterweise lassen sich die Deckungsabweichungen aber auch mit einer insbesondere normierten Korrelationsfunktion ermitteln. In diesem Falle stellen höhere Werte in der Symmetriekarte größere Symmetrien dar, da die entsprechenden Bereiche stärker miteinander korreliert sind.

Das erfindungsgemäße Verfahren der symmetriebasierten Visualisierung kann auch dazu eingesetzt werden, eine solche Symmetrieachse oder Symmetrieebene, insbesondere die mediane Sagittalebene, aufzufinden. Das kann durch eine Abfolge von Symmetrieoperationen im Hinblick auf eine Minimierung der Deckungsabweichungen automatisch geschehen. Dabei ist die optimale Symmetrieebene dann gefunden, wenn auf der Symmetriekarte möglichst wenige Bereiche als asymmetrisch dargestellt werden. Ein solches automatisches Auffinden der Symmetrieebene kann im Vorfeld geschehen, wobei diese dann für das Verfahren verwendet wird.

Für den Betrachter ist es dabei besonders anschaulich, wenn die bekannte Originaldarstellung mit der ermittelten Symmetriekarte überblendet wird, so dass die Symmetrien respektive Asymmetrien in das Original eingeblendet sind. Bei einer solchen Überblendung wird die Originaldarstellung um die in der Symmetriekarte gespeicherten Daten selektiv ergänzt. Bezüglich der letztendlichen Darstellung zum Zwecke der möglichst markanten Visualisierung der Symmetrien bzw. Asymmetrien sind verschiedene Alternativen gegeben. Als besonders markant hat sich eine auffällige Einfärbung der Asymmetrien in der Originaldarstellung erwiesen, die dem Betrachter besonders ins Auge sticht. Insbesondere kann eine Falschfarbendarstellung verwendet werden, die zwar alle Strukturen anzeigt, aber diejenigen Strukturen farblich markiert, die asymmetrisch sind.

Das erfindungsgemäße Verfahren ermöglicht somit eine Originaldarstellung, die anhand der in den Bilddaten vorliegenden Symmetrie respektive Asymmetrie moduliert ist. Dabei kann eine mit dem Verfahren erstellte Symmetriekarte benutzt werden, um jegliche Visualisierungs-Verfahren zu modulieren. Beispielsweise können Symmetrien respektive Asymmetrien die Sichtbarkeit, den Kontrast oder die Opazität der Volumenelemente ("Voxel") in der Originaldarstellung parametrisieren. Durch solch eine Modulierung von Darstellungsparametern anhand der Symmetriekarte ist eine Vielzahl an Darstellungsmöglichkeiten gegeben.

Insbesondere ist es vorteilhaft, wenn mit Hilfe der Symmetriekarte nur diejenigen Pixel- oder Voxelbereiche insbesondere in einer 3D Darstellung angezeigt werden, die eine bestimmte Asymmetrie überschreiten und damit wahrscheinlich eine Dysgnathie darstellen. Dazu wird die Symmetriekarte mit einer Filterfunktion bearbeitet, um nur die Symmetrien unterhalb einer vorgegebenen Größenordnung zu darzustellen. Auf diese Weise wird der die Darstellung betrachtende Arzt unmittelbar auf die wichtigen und möglicherweise pathologischen Stellen hingewiesen. Umgekehrt können auch nur diejenigen Pixel- oder Voxelbereiche in eine 3D Darstellung eingeblendet werden, die eine bestimmte Symmetrie überschreiten, also unauffällig sind. Dazu wird die Symmetriekarte mit einer Filterfunktion so bearbeitet, dass Symmetrien unterhalb einer vorgegebenen Größenordnung nun unterdrückt werden.

Unter Zuhilfenahme der erfindungsgemäßen Symmetriekarte können auch aus den Originaldaten simulierte Fernröntgenseitenaufnahmen ("Ceph") oder Panoramaansichten in dem Sinne moduliert werden, dass die aufgefundenen Asymmetrien in diese eingeblendet werden. So können beispielsweise ausschließlich diejenigen Strukturen in Ceph und Panorama gezeigt werden, die eine bestimmte Symmetrie oder Asymmetrie unter- oder überschreiten. Laterale Cephs der linken respektive der rechten Gesichtshälfte können getrennt nebeneinander in einer Ansicht dargestellt werden, so dass alle automatisch gefundenen Asymmetrien auf der jeweiligen Gesichtshälfte direkt miteinander verglichen werden können.

In der Symmetriekarte können die Beträge der Differenzen auf jeder Seite der Symmetrieachse dargestellt sein, so dass sich ein im Prinzip symmetrisches Bild ergibt. Es kann jedoch vorteilhaft sein, eine Asymmetrie nach einem vorgegebenen Kriterium auszuwählen, entsprechend einzufärben und nur auf einer Seite der Symmetriekarte darzustellen. Dieses Kriterium kann beispielsweise sein, dass in der Symmetriekarte nur diejenigen Bereiche angezeigt werden, die - verglichen mit der gespiegelten Seite - einen im Mittel niedrigeren Absolutwert in der insbesondere gefilterten Originaldarstellung aufweisen.

So kann es beispielsweise vorteilhaft sein, eine aufgefundene Asymmetrie auf nur einer Seite, nämlich der Seite der Fehlstelle in der Anatomie, statt auf beiden Seiten darzustellen. Dem Betrachter wird beispielsweise nur auf der Seite eine farbliche Hervorhebung gezeigt, auf der ein Zahn fehlt. In einer besonders vorteilhaften Ausprägung kann dem Betrachter auch auf der Seite der Zahnlücke die Anatomie des gesunden Zahnes der Gegenseite eingeblendet und entsprechend hervorgehoben werden. So kann sich der Betrachter unmittelbar ein gutes Bild von der virtuell restaurierten Anatomie machen.

In einer ganz besonders zu bevorzugenden Ausführungsform werden die ursprünglichen Bilddaten, die der Originaldarstellung zugrunde liegen, vor der Spiegelung zunächst mit einer Filterfunktion bearbeitet, um eine Glättung der ursprünglichen Bilddaten zu bewirken. Besonders geeignet dafür sind Skalenfilter, mit denen Strukturen bestimmter Größe unterdrückt bzw. verstärkt werden können. Mit einem geeigneten Skalenfilter können beispielsweise kleine Variationen, die auch in makroskopisch symmetrischen anatomischen Strukturen vorkommen, eliminiert werden. Auch Bildrauschen, das unweigerlich während des Aufnahmeprozesses in die Bilddaten eingebracht wird, kann so eliminiert werden, ohne die Struktur größerer Strukturen in den Bilddaten maßgeblich zu beeinflussen.

Ganz besonders gute Ergebnisse werden mit Skalenfiltern erzielt, die kantenerhaltende Eigenschaften haben. Mit solchen kantenerhaltenen Filtern können großskalige Gewebestrukturen hervorgehoben werden, während die weniger bedeutsamen kleinskaligen Strukturen (auch innerhalb großskaliger Objekte) abgeschwächt werden können, ohne dabei die Kanten großskaliger Objekte maßgeblich zu beeinflussen. Die Eingangsparameter der Filterfunktion können vor der Filterung den Gegebenheiten angepasst werden, um das Filterergebnis im Hinblick auf die nachfolgende Spiegelung zu optimieren.

Dem Skalenfilter, mit dem die Volumendaten vor der Ermittelung der Symmetrie gefiltert werden, kommt eine besondere Bedeutung zu. So kann die Symmetrieerkennung mit diesem Skalenfilter auf diejenigen anatomischen Strukturen beschränkt werden, die eine bestimmte Mindestgröße aufweisen. Dabei kann beispielsweise ein Filter gewählt werden, der dem Symmetriekriterium vorwiegend Strukturen in der Größe von Zähnen unterwirft. Ohne ein solches Skalenfilter wäre es möglich, dass das in den Volumendaten vorherrschende Rauschen die Punkt-für-Punkt Symmetrieerkennung unmöglich macht. Andererseits sind kleine natürliche Varianzen in der Anatomie normal. Diese würden ohne Wahl einer passenden Skala die Symmetrieerkennung korrumpieren.

Da nach der der Symmetrieerkennung erneut Strukturen in der Symmetriekarte auftauchen können, die kleiner sind, als die zu erkennen gewünschten Strukturen, kann es vorteilhaft sein, die Bilddaten der Symmetriekarte noch einmal mit einer Filteroperation zu bearbeiten, die wiederum einen bestimmten Skalenraum selektiert. Solche Strukturen können durch minimale Deckungsabweichungen selbst großer Objekte entstehen und werden vorteilhafterweise durch einen morphologischen Operator, insbesondere einen morphologischen Öffnungsoperator, unterdrückt. Im Ergebnis gelangen nur solche Strukturen in die Symmetriekarte, die eine bestimmte Größe überschreiten oder eine bestimmte Form aufweisen.

In einer vorteilhaften Anwendung wird das erfindungsgemäße Verfahren für eine Verlaufskontrolle genutzt. Dabei wird der Patient zu aufeinanderfolgenden Zeitpunkten derselben Untersuchung unterzogen, wobei jedes Mal die Asymmetrien ermittelt werden. Wenn die Asymmetrien auf ein gemeinsames Koordinatensystem registriert sind, können sie dem behandelnden Arzt als zeitlicher Verlauf präsentiert werden. Eine solche Verlaufskontrolle kann eindrucksvoll den Verlauf und den Erfolg einer kieferorthopädischen Behandlung dokumentieren.

Nachfolgend wird die Erfindung anhand von Schnittbildern erläutert. Darin zeigen:
- **Figur 1**: ein Schichtbild einer Axialebene durch einen Unterkiefer,
- **Figur 2**: das Schichtbild nach Bearbeitung mit einem kantenerhaltenden Skalenfilter,
- **Figur 3**: eine Symmetrie-Karte des Schichtbildes durch Diifferenz- und Betragbildung und
- **Figur 4**: eine automatische Extraktion von Strukturen eines bestimmten Größenbereiches aus der Symmetrie-Karte mittels eines morphologischen Öffnungsoperators.

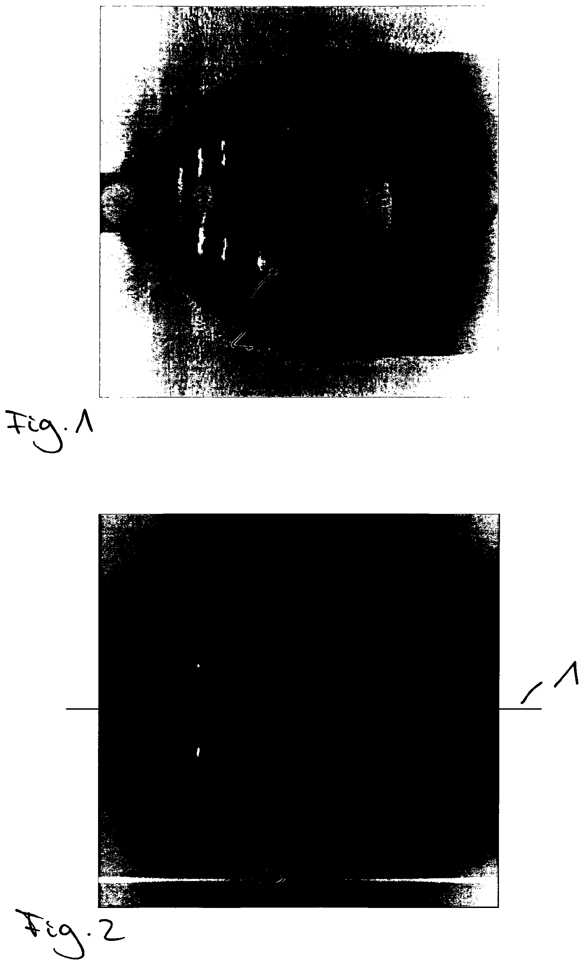

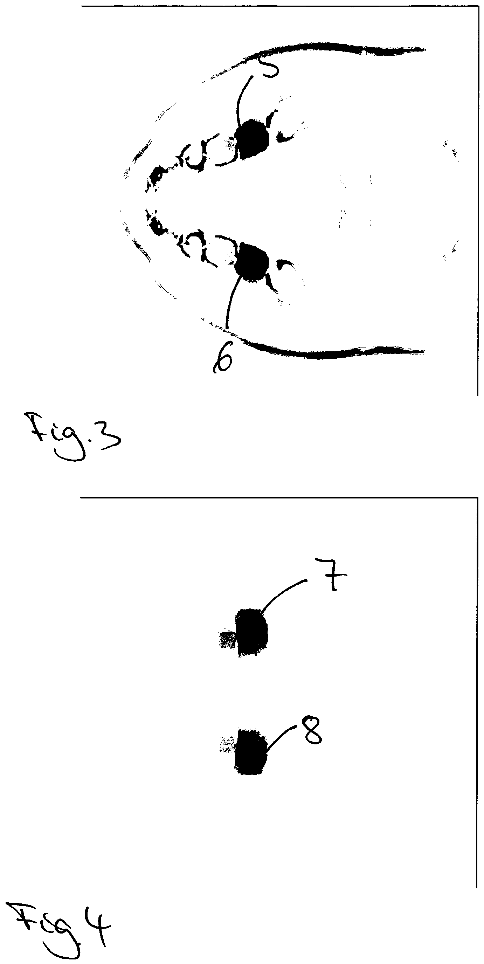

Das in Figur 1 gezeigte axiale Schichtbild durch einen menschlichen Unterkiefer weist eine Asymmetrie durch einen fehlenden Zahn auf. Dieses Schichtbild wird zunächst einer Vorverarbeitung durch Skalenfilter unterzogen, um kleine Strukturen zu unterbinden. Das geglättete Ergebnis ist in Figur 2 gezeigt. Auffällig ist, dass in diesem Bild kleine Strukturen unterdrückt sind, während die Kanten großskaliger Strukturen weitestgehend unangetastet sind. In Figur 2 ist die Mediansagittalebene 1 eingetragen. Nach dem erfindungsgemäßen Verfahren wird automatisch eine Symmetriekarte (Figur 3) generiert, die lediglich die durch Spiegelung an der Mediansagittalebene 1 ermittelten Symmetrieunterschiede in dunklem Farbton anzeigt. Die angezeigten Werte sind jeweils die absolute Differenz der Partnerpixel zueinander; dunklere Werte stellen entsprechend stärkere Abweichungen von der Spiegelsymmetrie dar. Anhand der Symmetriekarte können nun die symmetrischen Bereiche in den Bilddaten herausmaskiert werden, sodass nur noch die nicht asymmtrischen Bereiche (oder umgekehrt) sichtbar sind. Anstatt einer Ausmaskierung sind auch alle anderen möglichen Modulationen von Visualisierungsparametern anhand der Symmetriekarte möglich.

In Figur 4 ist letztendlich die automatische Extraktion von asymmetrischen Strukturen aus der Symmetriekarte nach Figur 3 mit Hilfe eines grauwertbasierten morphologischen Öffnungsoperators gezeigt, wobei nur die Strukturen dargestellt sind, die eine bestimmte Größe überschreiten. So werden kleine Symmetrieabweichungen, die durchaus in der Anatomie-Toleranz liegen, ausgeblendet. Es sind deutlich die Stellen hervorgehoben, auf denen eine deutliche Symmetrieabweichungen auf der Skala einer Zahngröße vorherrscht.

Die resultierende Maske nach Figur 4 kann zur Parametrisierung von Visualisierungsverfahren verwendet werden. Insbesondere kann sie über die Originaldarstellung nach Figur 1 gelegt werden, so dass darin die Asymmetrien deutlich sichtbar eingeblendet sind.

## Patentansprüche

1. Verfahren zur Visualisierung kieferorthopädischer Fehlstellungen durch automatische Aufbereitung und Darstellung in digitaler Form vorliegender radiologischer Bilddaten, die Gewebestrukturen im Körper eines Patienten enthalten, wobei der Datenraum ein Schnitt definierter Stärke durch dreidimensional vorliegende tomografische Bilddaten ist, wobei die Bilddaten über einen Datenraum verteilt und in einer Originaldarstellung darstellbar sind,
**dadurch gekennzeichnet,**
**dass** die Bilddaten an einer im Datenraum verlaufenden Symmetrieachse gespiegelt werden, wobei nachfolgend durch die Analyse von Deckungsabweichungen in den Gewebestrukturen vorhandene Asymmetrien ermittelt werden,
**dass** eine Vielzahl von Spiegelungen von Bilddaten unterschiedlicher Datenräume an einer entsprechenden Vielzahl von Symmetrieachsen durchgeführt werden,
**dass** durch die Abfolge von Spiegelungen im Hinblick auf eine Minimierung der Deckungsabweichungen eine Symmetrieebene automatisch ermittelt wird und
**dass** vorhandene Symmetrien respektive Asymmetrien bezüglich der Symmetrieebene in einer Symmetriekarte aufgezeichnet werden,
**dass** Darstellungsparameter der Originaldarstellung oder daraus simulierter Fernröntgenseitenaufnahmen oder Panoramaansichten anhand der Symmetriekarte moduliert werden, wobei Symmetrien respektive Asymmetrien die Sichtbarkeit oder den Kontrast oder die Opazität der Volumenelemente in der Originaldarstellung oder der daraus simulierten Fernröntgenseitenaufnahmen oder Panoramaansichten parametrisieren.

2. Verfahren nach Anspruch 1,
**dadurch gekennzeichnet,**
**dass** die Bilddaten der Originaldarstellung im Vorfeld der Spiegelung mit einer insbesondere kantenerhaltenden Filterfunktion bearbeitet werden, um interessierende Gewebestrukturen hervorzuheben.

3. Verfahren nach Anspruch 1 oder 2,
**dadurch gekennzeichnet,**
**dass** die Symmetriekarte mit einer Filterfunktion bearbeitet wird, um Asymmetrien vorgegebener Größenordnungen zu unterdrücken oder hervorzuheben.

4. Verfahren nach einem der vorherigen Ansprüche,
**dadurch gekennzeichnet,**
**dass** die Symmetrie und/oder die Asymmetrie mittels einer insbesondere normierten Korrelationsfunktion oder durch eine Differenzbildung, insbesondere unter Betragsbildung, ermittelt wird.

5. Verfahren nach einem der vorherigen Ansprüche,
**dadurch gekennzeichnet,**
**dass** bei aufgefundener Asymmetrie für bestimmte Regionen lediglich eine Seite der Symmetriekarte für die Darstellung verwendet wird, insbesondere die Seite, auf der anatomische Strukturen fehlen.

6. Verfahren nach einem der vorherigen Ansprüche,
**dadurch gekennzeichnet,**
**dass** bei aufgefundener Asymmetrie insbesondere die gesunde Gewebestruktur in der Originaldarstellung auf der Gegenseite eingeblendet wird.

7. Verfahren nach einem der vorherigen Ansprüche,
**dadurch gekennzeichnet,**
**dass** die Ermittlung und Darstellung der Asymmetrien zum Zwecke der Verlaufskontrolle zu aufeinanderfolgenden Zeitpunkten erfolgt, wobei die Darstellungen ein gemeinsames Koordinatensystem nutzen.

## Claims

1. A method for visualizing orthopedic defects in the jaw by automatic processing and representation of available radiologic image data in digital form, including the tissue structures in a patient's body, wherein the data space is a segment of a defined strength due to three-dimensional tomographic image data, wherein the image data are distributed over a data space and can be represented in an original representation,
**characterized in that**
the image data are reflected on an axis of symmetry running in the data space, wherein asymmetries existing in the tissue structures are ascertained by analysis of deviations in coverage,
a plurality of mirror images of image data of different data spaces is implemented on a corresponding plurality of axes of symmetry,
through the sequence of mirror images with regard to minimization of the deviations in coverage, a plane of symmetry is ascertained automatically, and
existing symmetries and/or asymmetries with respect to the plane of symmetry are recorded in a symmetry map, the representational parameters of the original representation or remote radiographic side views or panoramic view simulated therefrom are modulated on the basis of the symmetry map, wherein symmetries and/or asymmetries define parameters for the visibility or contrast or opacity of the volume elements in the original display or the remote radiographic side views or panoramic views.

2. The method according to claim 1,
**characterized in that**
the image data of the original display are processed in advance of the mirror image using an edge-preserving filter function in particular in order to emphasize the tissue structures of interest.

3. The method according to claim 1 or 2,
**characterized in that**
the symmetry map is processed using a filter function to emphasize or suppress asymmetries of predetermined orders of magnitude.

4. The method according to any one of the preceding claims,
**characterized in that**
the symmetry and/or asymmetry is determined by means of a standardized correlation function in particular or by forming a difference, in particular by forming an absolute value.

5. The method according to any one of the preceding claims,
**characterized in that**
when an asymmetry is found for certain regions, only one side of the symmetry map is used for the representation, in particular the side on which the anatomical structures are missing.

6. The method according to any one of the preceding claims,
**characterized in that**
when an asymmetry is discovered, in particular the healthy tissue structure is superimposed on the opposite side in the original representation.

7. The method according to any one of the preceding claims,
**characterized in that**
the determination and display of the asymmetries are done for the purpose of monitoring the course at successive points in time, wherein the displays utilize a shared coordinate system.

## Revendications

1. Procédé, destiné à la visualisation de désalignements orthodontiques par traitement et représentation automatiques sous forme numérique de données graphiques radiologiques existantes qui contiennent des structures tissulaires dans le corps d'un patient, l'espace de données étant une coupe d'épaisseur définie à travers des données graphiques tomographiques, présentes sous forme tridimensionnelle, les données graphiques étant distribuées sur un espace de données et en étant susceptibles d'être représentées en version originale, en ce que les données graphiques sont réfléchies sur un axe de symétrie s'écoulant dans l'espace de données, par la suite, par l'analyse de divergences de recouvrement dans les structures tissulaires, des asymétries présentes étant déterminées,
en ce qu'une pluralité de réflexions des données graphiques de différents espaces de données sont réalisées sur une pluralité correspondante d'axes de symétrie,
en ce que par la séquence de réflexions, un plan de symétrie est déterminé automatiquement, sous considération d'une minimisation des divergences de recouvrement et
en ce que des symétries, respectivement des asymétries présentes par rapport au plan de symétrie sont enregistrées sur une carte de symétrie,
en ce que des paramètres de représentation de la version originale ou des clichés latéraux de téléradiographie ou des clichés panoramiques simulés à partir de celle-ci sont modulés à l'aide de la carte de symétrie, des symétries, respectivement des asymétries paramétrant la visibilité ou le contraste ou l'opacité des éléments de volume dans la version originale ou dans les clichés latéraux de téléradiographie ou les clichés panoramiques simulés à partir de celle-ci.

2. Procédé selon la revendication 1, **caractérisé en ce que** les données graphiques de la version originale sont traitées en amont de la réflexion, à l'aide d'une fonction de filtrage notamment préservatrice des bords, pour mettre en évidence des structures tissulaires intéressantes.

3. Procédé selon la revendication 1 ou 2, **caractérisé en ce que** la carte de symétrie est traitée avec une fonction de filtrage, pour réprimer ou pour mettre en évidence des asymétries d'ordres de grandeurs prédéfinis.

4. Procédé selon l'une quelconque des revendications précédentes, **caractérisé en ce que** la symétrie et/ou l'asymétrie est déterminée au moyen d'une fonction de corrélation notamment normalisée ou par une soustraction, notamment sous génération d'un montant.

5. Procédé selon l'une quelconque des revendications précédentes, **caractérisé en ce que** si une asymétrie a été décelée, pour certaines régions, seul un côté de la carte de symétrie est utilisé pour la représentation, notamment le côté sur lequel des structures anatomiques fond défaut.

6. Procédé selon l'une quelconque des revendications précédentes, **caractérisé en ce que** si une asymétrie a été décelée, notamment la structure tissulaire saine est affichée dans la version originale sur le côté opposé.

7. Procédé selon l'une quelconque des revendications précédentes, **caractérisé en ce qu'**aux fins du suivi, la détermination et la représentation des asymétries s'effectuent à des moments successifs, les représentations utilisant un système de coordonnées commun.
